(19) Europäisches Patentamt
European Patent Office
Office européen des brevets

(11) **EP 2 841 341 B1**

(12) **FASCICULE DE BREVET EUROPEEN**

(45) Date de publication et mention de la délivrance du brevet:
**05.08.2020   Bulletin 2020/32**

(21) Numéro de dépôt: **13723852.3**

(22) Date de dépôt: **23.04.2013**

(51) Int Cl.:
**B64D 45/02** *(2006.01)*      **B29C 70/88** *(2006.01)*
**B29C 70/54** *(2006.01)*

(86) Numéro de dépôt international:
**PCT/FR2013/050894**

(87) Numéro de publication internationale:
**WO 2013/160604 (31.10.2013 Gazette 2013/44)**

(54) **UTILISATION D'UN EMPILEMENT POUR AMELIORER LA CONDUCTIVITE ELECTRIQUE TRANSVERSE D'UNE PIECE COMPOSITE**

VERWENDUNG EINES STAPELNS ZUR VERBESSERUNG DER TRANSVERSALEN ELEKTRISCHEN LEITFÄHIGKEIT EINES VERBUNDBAUTEILS

USE OF A STACK TO IMPROVE THE TRANSVERSE ELECTRIC CONDUCTIVITY OF A COMPOSITE COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.04.2012   FR 1253927**

(43) Date de publication de la demande:
**04.03.2015   Bulletin 2015/10**

(73) Titulaire: **Hexcel Reinforcements**
**01120 Dagneux (FR)**

(72) Inventeurs:
• **VIARD, Andrea**
  **F-38460 Villemoirieu (FR)**
• **DUCARRE, Jacques**
  **F-38630 Corbelin (FR)**

(74) Mandataire: **Cabinet Beau de Loménie**
**51 avenue Jean Jaurès**
**BP 7073**
**69301 Lyon Cedex 07 (FR)**

(56) Documents cités:
**WO-A1-2011/065437      WO-A2-2011/048340**
**US-A1- 2010 021 682**

EP 2 841 341 B1

**Description**

La présente invention concerne le domaine technique des matériaux de renfort, adaptés à la constitution de pièces composites. Plus précisément, l'invention concerne une utilisation permettant d'améliorer la conductivité électrique transverse de la pièce composite obtenue.

La fabrication de pièces ou d'articles composites, c'est-à-dire comprenant, d'une part, un ou plusieurs renforts ou nappes fibreuses et, d'autre part, une matrice qui est, le plus souvent, principalement de type thermodurcissable (« résine ») et peut inclure des thermoplastiques, peut, par exemple, être réalisée par un procédé dit "direct" ou "LCM" (de l'anglais « Liquid Composite Moulding »). Un procédé direct est défini par le fait qu'un ou plusieurs renforts fibreux sont mis en œuvre à l'état "sec" (c'est-à-dire sans la matrice finale), la résine ou matrice, étant mise en œuvre séparément, par exemple par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Pour économiser en carburant, l'industrie aéronautique a remplacé de nombreux matériaux métalliques par des matériaux composites qui sont plus légers. De plus, de nombreuses commandes de vol hydrauliques sont remplacées par des commandes électroniques toujours dans un souci de gain de poids.

La résine qui est ultérieurement associée, notamment par injection ou infusion, aux nappes unidirectionnelles de renfort, lors de la réalisation de la pièce, peut être une résine thermodurcissable, par exemple du type époxy. Pour permettre un écoulement correct au travers d'une préforme constituée d'un empilement de différentes couches de fibres de carbone, cette résine est, le plus souvent, très fluide, par exemple d'une viscosité de l'ordre de 50 à 200 mPa.s. à la température d'infusion/injection. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches unidirectionnelles de fibres de carbone à des couches intermédiaires à base de résine, et notamment à un non-tissé de fibres thermoplastiques. De telles solutions sont notamment décrites dans les demandes de brevet ou les brevets EP 1125728, US 6,828,016, WO 00/58083, WO 2007/015706, WO 2006/121961 et US 6,503,856. L'ajout de cette couche de résine intermédiaire tel qu'un non-tissé permet d'améliorer les propriétés mécaniques au test de compression après impact (CAI), test utilisé de manière courante pour caractériser la résistance des structures à l'impact.

La demanderesse a également proposé dans les demandes de brevet antérieures WO 2010/046609 et WO 2010/061114, des matériaux intermédiaires particuliers comportant une nappe de fibres unidirectionnelles, en particulier de carbone, associée par collage, sur chacune de ses faces à un non-tissé de fibres thermoplastiques (également nommé non-tissé), ainsi que leur procédé d'élaboration. De tels matériaux composites sont constitués de couches de carbone et de couches de matière thermodurcissable ou thermoplastique. La fibre de carbone est conductrice d'électricité à la différence des matières thermodurcissables ou thermoplastiques. L'empilement de ces deux matériaux est donc un empilement de matériaux conducteurs et de matériaux isolants. La conductivité électrique transverse est donc quasi nulle, du fait de la présence de couches de résine.

Or, pour dissiper l'énergie apportée par le passage de la foudre sur le fuselage ou la voilure (ailes) et également assurer la fonction de retour de courant, la conductivité électrique transverse des pièces composites utilisées en aéronautique doit être importante. Les réserves de carburant étant situées dans les ailes des avions, il est primordial d'arriver à dissiper l'énergie électrique et donc d'avoir une bonne conductivité selon l'axe orthogonal à la surface de la pièce, axe nommé z. En structure aéronautique, la conductivité électrique était apportée, jusqu'à aujourd'hui, par le matériau lui-même, qui était majoritairement à base d'aluminium. Les nouveaux modèles d'avions intégrant de plus en plus de matériaux composites, majoritairement à base de carbone, il est devenu indispensable d'apporter une conductivité supplémentaire pour assurer les fonctions de retour de courant et de résistance à la foudre. Cette conductivité est apportée actuellement sur des pièces composites à base de fibres de carbone par l'utilisation locale de rubans ou tresses métalliques liant les pièces entre elles. Une telle solution augmente considérablement la masse et le coût de la solution composite, et n'est donc pas satisfaisante.

La demande de brevet WO 2011/048340 décrit également la mise en œuvre d'empilements alternant nappe unidirectionnelle et non-tissé thermoplastique, solidarisés par des liaisons ponctuelles pouvant s'accompagner de perforations. La demande de brevet EP 2 505 342 (correspondant à WO 2011/065437) prévoit également de réaliser des trous dans un empilement de préimprégnés, de manière à améliorer la résistance inter-laminaire et lutter contre le délaminage. Dans ce document, il est aussi envisagé d'insérer des clous en fibre de carbone dans les trous réalisés, de manière à maintenir le laminé qui est réalisé à partir de pré-imprégnés. Il est indiqué qu'une telle présence de clous insérés dans les trous permet d'améliorer les propriétés de conductivité électrique entre les différentes couches de fibres de carbone. Il apparaît donc clairement que, dans le cas de ce document, la réalisation des trous n'est nullement utilisée pour améliorer la conductivité électrique transverse de la pièce finale, puisque cette amélioration est obtenue par l'introduction subséquente de clous dans les trous préalablement réalisés. Dans le cadre de l'invention, les inventeurs ont mis en évidence un nouveau moyen d'obtenir des pièces composites qui présentent une conductivité électrique satisfaisante, notamment dans l'épaisseur de la pièce non parallèle au plis qui la constituent, même dans les cas où de telles pièces sont constituées d'un empilement de matériaux de renfort à base de fibres de carbone entre lesquels est intercalée au moins une couche de matière thermoplastique ou thermodurcissable ou d'un mélange de matières thermoplastique et thermodurcissable.

La présente invention concerne une utilisation suivant la revendication 1.

La conductivité transverse peut être définie comme étant l'inverse de la résistivité qui est elle-même égale à la résistance que multiplie la surface et que divise l'épaisseur de la pièce. En d'autres termes, la conductivité transverse est la capacité qu'à la pièce à propager et conduire le courant électrique au sein de son épaisseur et peut être mesurée selon la méthode détaillée dans les exemples.

La description qui va suivre, en référence aux Figures annexées, permet de mieux comprendre l'invention.

La **Figure 1** est une vue schématique illustrant un mode de mise en œuvre de l'invention.

La **Figure 2** est une vue schématique illustrant un autre mode de mise en œuvre de l'invention.

La **Figure 3** est une vue schématique d'une série de points d'application au niveau desquels les efforts traversants, pénétrations, ou perforations sont exercés.

La **Figure 4** (vue d'ensemble et grossissement au niveau d'une perforation) est une photographie d'un matériau intermédiaire perforé pouvant être utilisé dans le cadre de l'invention.

La **Figure 5** représente schématiquement un dispositif d'application ponctuelle d'efforts traversants.

Dans le cadre de l'invention, l'opération d'application ponctuelle d'efforts traversants correspond à une opération de pénétration en différents points d'application ou de pénétration. Dans la suite de la description, on nommera indifféremment opération d'application ponctuelle d'efforts traversants ou opération de pénétration en différents points de pénétration, une telle étape consistant à traverser au moins deux couches voisines d'un matériau de renfort et d'une couche de matière thermoplastique ou thermodurcissable.

L'empilement est constitué de couches de matériaux de renfort de fibres de carbone et de couches de matière thermoplastique ou thermodurcissable ou d'un mélange de telles matières, qui sont superposées les unes sur les autres. Au moins une couche de matière thermoplastique ou thermodurcissable ou d'un mélange de telles matières est intercalée entre deux couches de matériaux de renfort de fibres de carbone. La couche de matière thermoplastique ou thermodurcissable la plus proche d'une couche de matériau de renfort de fibres de carbone est nommée couche voisine de cette dernière. Par couches voisines, on entend en particulier deux couches directement adjacentes, c'est-à-dire se succédant dans l'empilement en étant positionnées l'une contre l'autre.

L'opération d'application ponctuelle d'efforts traversants est, de préférence, réalisée grâce à la pénétration d'une aiguille ou d'une série d'aiguilles, ce qui permet de bien maîtriser l'orientation des efforts traversants. Néanmoins, il pourrait très bien être prévu de réaliser une telle opération grâce à un jet d'air ou d'eau.

Bien entendu, l'organe ou le moyen utilisé pour l'opération de pénétration, est retiré soit après avoir traversé l'empilement ou la partie de l'empilement sur lequel l'opération de pénétration est réalisée, soit en effectuant un trajet aller-retour. L'amélioration de la conductivité électrique est obtenue, même après retrait de cet organe ou moyen qui peut être de tout type, contrairement à l'enseignement de la demande EP 2 505 : 342 ou à l'enseignement de la publication US 2010/0021682 A1.

Le but et le résultat de cette pénétration sont de faire pénétrer certaines des fibres de carbone d'un matériau de renfort dans l'épaisseur de la couche de matière thermoplastique ou thermodurcissable ou d'un mélange des deux, de manière à ce que, dans la pièce finale, ces fibres de carbone puissent venir toucher les fibres de carbone du matériau de renfort se trouvant de l'autre côté de la couche de matière thermoplastique ou thermodurcissable, pour ainsi augmenter la conductivité électrique transverse de la pièce composite finale obtenue. C'est pourquoi cette opération est réalisée de manière à pénétrer successivement une couche de matériau de renfort de fibres de carbone et au moins une couche de matière thermoplastique ou thermodurcissable ou d'un mélange de telles matières qui lui est voisine, dans la position de superposition que les couches pénétrées ont dans l'empilement final utilisé pour la fabrication de la pièce composite. Dans le cadre de l'invention, c'est uniquement l'opération d'application d'efforts traversants qui est utilisée pour améliorer la conductivité. Dans l'utilisation selon l'invention, après cette application d'efforts traversants, aucun organe externe n'est inséré dans les points d'application pour obtenir l'amélioration de la conductivité électrique, contrairement à ce qui est fait dans la demande EP 2 505 342 ou à l'enseignement de la publication US 2010/0021682 A1.

De manière avantageuse, l'opération de pénétration est réalisée, de manière à obtenir une conductivité électrique transverse d'au moins 15 S/m, de préférence d'au moins 20 S/m, et préférentiellement de 60 à 300 S/m, pour la pièce composite obtenue.

De manière préférentielle, l'opération de pénétration est réalisée selon une direction transversale à la surface des couches qui sont traversées.

Il a été constaté qu'une densité de points de pénétration de 40 000 à 250 000 par $m^2$ permettait d'obtenir des résultats en termes de conductivité électrique transverse particulièrement satisfaisants. L'opération de pénétration peut entraîner ou non la création d'ouverture ou perforation. Selon un mode de réalisation particulier de l'invention, adapté par ailleurs à toutes ses variantes de mise en œuvre, l'opération d'application ponctuelle d'efforts traversants laisse des perforations dans les couches traversées. Les ouvertures créées par l'opération de perforation présenteront le plus souvent, dans le plan des couches traversées, une section circulaire ou plus ou moins allongée, sous la forme d'un œil ou fente. Les perforations résultantes ont, par exemple, une plus grande dimension, mesurée parallèlement à la surface traversée, située dans la gamme allant de 1 à 10mm. En particulier, l'opération d'application ponctuelle d'efforts traversants conduit à la création d'un facteur d'ouverture supérieur à 0 et inférieur ou égal à 8%, et de préférence de 2 à 5 %. Le facteur d'ouverture peut être défini comme le rapport entre la surface non occupée par la matière et la surface totale observée, dont l'observation peut être faite par le dessus du matériau avec un éclairage par le dessous de ce dernier. Il peut, par exemple, être mesuré selon la méthode décrite dans la demande WO 2011/086266 et sera exprimé en %.

L'opération d'application ponctuelle d'efforts traversants est, de préférence, accompagnée d'un chauffage entrainant la fusion au moins partielle de la matière thermoplastique ou thermodurcissable ou d'un mélange des deux, au niveau des points d'applications des efforts traversants. De préférence, cette fusion a lieu sur toutes les couches traversées de matière thermoplastique ou thermodurcissable ou d'un mélange des deux. Pour cela, on utilisera, par exemple, un organe de pénétration lui-même chauffé. Une telle opération permet notamment de réaliser des soudures et d'ainsi fixer les perforations, de manière à ce que ces dernières restent, même après le retrait de l'organe ou du moyen de pénétration utilisé pour appliquer l'effort traversant. En l'absence d'un tel chauffage, le matériau de renfort et la couche de matière thermoplastique ou thermodurcissable ou d'un mélange des deux peuvent avoir tendance à se resserrer autour du point de pénétration, après retrait de l'organe ou du moyen de pénétration utilisé, de sorte que le facteur d'ouverture obtenu pourrait correspondre alors à celui présent avant l'opération de pénétration.

L'opération de pénétration peut être réalisée sur l'empilement déjà constitué ou sur des matériaux intermédiaires qui vont ensuite être empilés pour former l'empilement nécessaire à la réalisation de la pièce composite.

Dans le premier cas, l'opération de pénétration sera réalisée de manière à traverser, en chaque point de pénétration, l'épaisseur totale de l'empilement. Avant l'opération d'application ponctuelle d'efforts traversants, les différentes couches constitutives de l'empilement pourront être simplement déposées les unes sur les autres, sans être liées les unes aux autres, ou certaines ou toutes les couches constitutives de l'empilement pourront être liées entre elles, par exemple, par une opération de thermocollage, couture ou autre.

Lorsque des matériaux intermédiaires sont utilisés, l'opération de pénétration peut être réalisée sur les matériaux intermédiaires préalablement à leur empilement ou sur l'empilement déjà constitué.

Si l'opération de pénétration est réalisée sur les matériaux intermédiaires, une telle opération est, de préférence, menée sur chaque matériau intermédiaire qui va être superposé dans l'empilement et/ou, de manière à traverser, en chaque point de pénétration, l'épaisseur totale de chaque matériau intermédiaire. Bien entendu, une tension suffisante, notamment de $1.10^{-3}$ à $2.10^{-2}$ N/mm sera appliquée notamment sur le matériau intermédiaire, le plus souvent en défilement, lors de l'opération de pénétration, de manière à permettre l'introduction du moyen ou de l'organe de pénétration choisi. Il n'est pas nécessaire que les points de pénétration se superposent lors de l'empilement des matériaux intermédiaires.

Il est, selon un mode de réalisation privilégié dans le cadre de l'invention, possible de réaliser l'empilement par superposition de matériaux intermédiaires constitués d'un matériau de renfort à base de fibres de carbone, associé sur au moins une de ses faces à une couche de matière thermoplastique ou thermodurcissable ou d'un mélange des deux. Un tel matériau intermédiaire pourra être constitué d'un matériau de renfort à base de fibres de carbone, associé sur une seule de ses faces, ou sur chacune de ses faces, à une couche de matière thermoplastique ou thermodurcissable ou d'un mélange des deux. De tels matériaux intermédiaires présentent une cohésion propre, la ou les deux couches de matière thermoplastique ou thermodurcissable ou d'un mélange des deux étant associée(s) au matériau de renfort, de préférence grâce au caractère thermoplastique ou thermodurcissable de la couche par thermocompression.

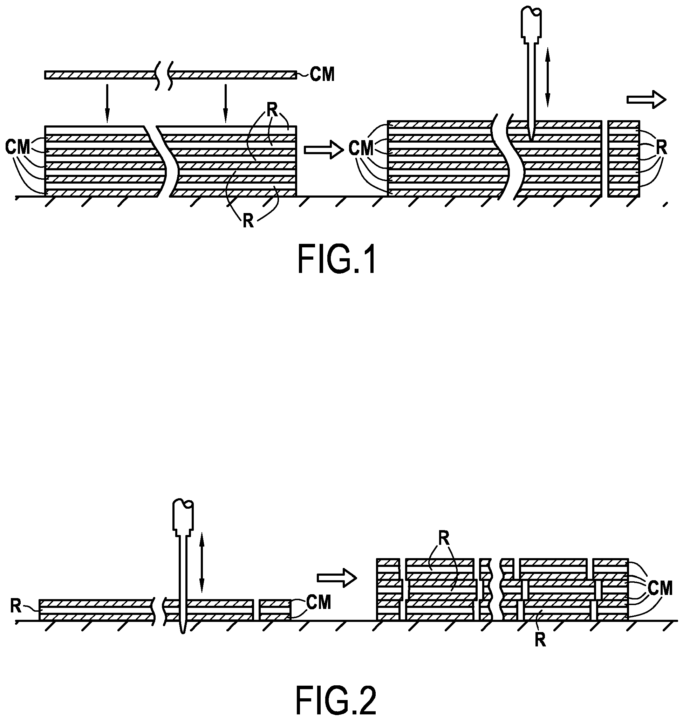

Une seule couche de matière thermoplastique ou thermodurcissable ou d'un mélange des deux peut être située entre deux matériaux de renfort à base de fibres de carbone consécutifs. Dans ce cas, l'empilement peut correspondre à un enchaînement $(CM/R)^n$, **CM** désignant une couche de matière thermoplastique ou thermodurcissable ou d'un mélange des deux, **R** un matériau de renfort à base de fibres de carbone et n désignant un nombre entier, avec, en particulier, toutes les couches de matière thermoplastique ou thermodurcissable ou d'un mélange des deux présentes au sein de l'empilement qui sont de grammage identique. L'empilement peut également correspondre à un enchaînement $(CM/R)^n/CM$, **CM** désignant une couche de matière thermoplastique ou thermodurcissable ou d'un mélange des deux, **R** un matériau de renfort à base de fibres de carbone et n désignant un nombre entier, avec, en particulier, les couches externes de matière thermoplastique ou thermodurcissable ou d'un mélange des deux qui ont un grammage égal au demi-grammage de chacune des couches internes de matière thermoplastique ou thermodurcissable ou d'un mélange des deux. La **Figure 1** illustre l'invention avec un tel empilement dans le cas où l'opération d'application ponctuelle d'efforts traversants est réalisée sur l'empilement après sa constitution.

La demande WO 2011/048340 décrit de tels empilements constitués d'une alternance de nappes unidirectionnelles de carbone, et de non-tissés de fibres thermoplastiques qui sont soumis à une opération de pénétration/perforation. On pourra se référer à cette demande de brevet pour plus de détails. Néanmoins, alors que dans l'invention, l'opération de pénétration ou de perforation est réalisée pour améliorer la conductivité transverse de la pièce composite finale obtenue, dans cette demande de brevet, elle est utilisée pour améliorer la perméabilité de l'empilement lors de la réalisation de la pièce composite mettant en œuvre une diffusion de résine au sein de l'empilement.

Il est également possible que deux couches de matière thermoplastique ou thermodurcissable ou d'un mélange des deux soient situées entre deux matériaux de renfort à base de fibres de carbone consécutifs. C'est le cas, notamment, quand l'empilement est réalisé par superposition de matériaux intermédiaires constitués d'un matériau de renfort à base de fibres de carbone, associé sur chacune de ses faces, à une couche de matière thermoplastique ou thermodurcissable ou d'un mélange des deux.

La **Figure 2** illustre l'invention dans le cas où un empilement est réalisé à partir d'un matériau de renfort **R** à base de fibres de carbone, associé sur chacune de ses faces, à une couche de matière **CM** thermoplastique ou thermodurcissable ou d'un mélange des deux, ayant subi préalablement à son empilement, l'opération d'application ponctuelle d'efforts traversants.

Dans le cas où le matériau de renfort est une nappe unidirectionnelle, les points de pénétration seront, préférentiellement, disposés de manière à former, par exemple un réseau de lignes parallèles, et seront avantageusement, disposés sur deux séries **S1** et **S2** de lignes, de sorte que :

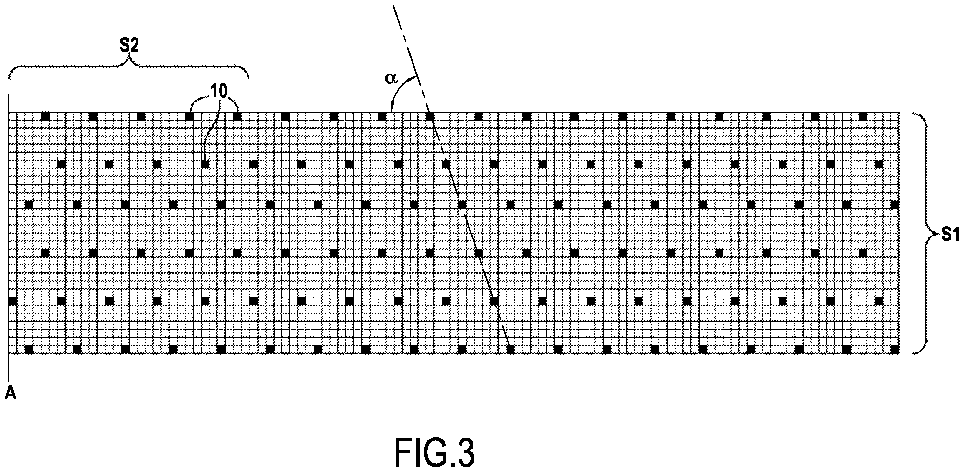

- dans chaque série **S1** et **S2,** les lignes soient parallèles entre elles,
- les lignes d'une série **S1** soient perpendiculaires à la direction A des fibres unidirectionnelles de la nappe de carbone,
- les lignes des deux séries **S1** et **S2** soient sécantes et forment, entre elles, un angle $\alpha$ différent de 90°, et notamment, de l'ordre de 50 à 85° qui est d'environ 60° dans l'exemple illustré **Figure 3.**

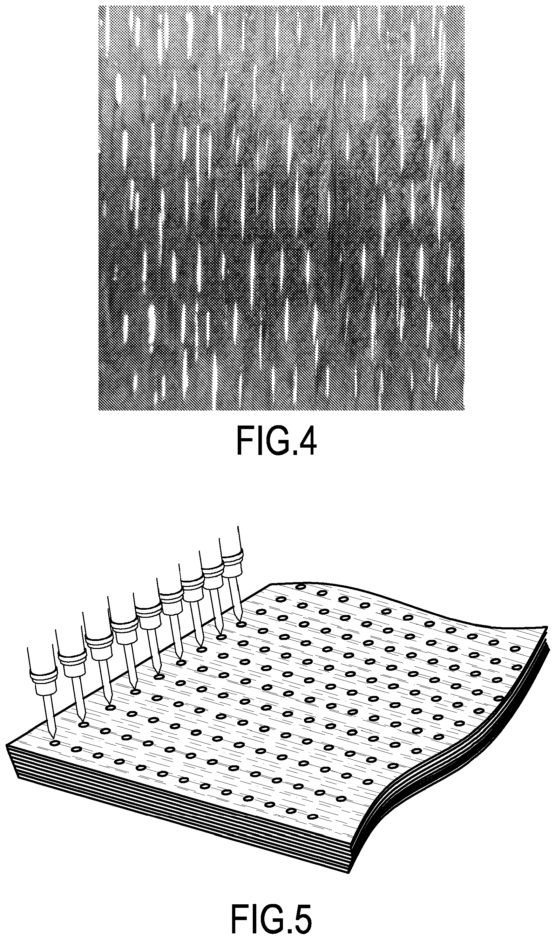

Une telle configuration est illustrée **Figure 3.** Etant donné qu'au niveau des points de pénétration **10,** la pénétration d'un organe tel qu'une aiguille, entraine non pas la formation d'un trou, mais plutôt d'une fente comme le montre la **Figure 4,** du fait que les fibres de carbone s'écartent les unes des autres au niveau du point de pénétration, on obtient ainsi un décalage des fentes les unes par rapport aux autres. Ceci permet d'éviter la création d'une ouverture trop importante du fait de la réunion de deux fentes trop rapprochées l'une de l'autre.

La demande WO 2010/046609 décrit de tels matériaux intermédiaires ayant subi une opération préalable de pénétration/perforation, constitués d'une nappe unidirectionnelle de carbone, associée sur chacune de ses faces à un non-tissé de fibres thermoplastiques. On pourra se référer à cette demande de brevet pour plus de détails, étant donné, qu'elle décrit de manière détaillée un matériau intermédiaire et un procédé de fabrication de pièces composites pouvant être utilisés dans le cadre de l'invention. Là encore, dans cette demande de brevet, l'opération de pénétration ou de perforation était réalisée pour améliorer la perméabilité de l'empilement lors de la réalisation de la pièce composite. Dans le cadre de l'invention, une telle opération est utilisée pour améliorer la conductivité électrique transverse de la pièce composite finale obtenue. Une telle amélioration est mise en évidence dans les exemples qui vont suivre.

Dans le cadre de l'invention, quelle que soit la variante de mise en œuvre, l'opération d'application ponctuelle d'efforts traversants sera réalisée par tout moyen de pénétration approprié, de préférence automatisé, et notamment grâce à une série d'aiguilles, picots ou autre. Le diamètre des aiguilles (dans la partie régulière après la pointe) sera notamment de 0,8 à 2,4mm. Les points d'applications seront, le plus souvent espacés de 5 à 2 mm.

Un chauffage est, le plus souvent, réalisé au niveau du moyen de pénétration ou autour de ce dernier, de manière à figer l'ouverture réalisée au sein des zones traversées et ainsi obtenir une perforation. Une résistance chauffante peut, par exemple, être directement intégrée dans le moyen de pénétration, du type aiguille. Il se produit ainsi une fusion de la matière thermoplastique ou une polymérisation partielle ou complète dans le cas d'une matière thermodurcissable autour du moyen de pénétration, et ce sur toute les couches de matière thermoplastique ou thermodurcissable ou d'un mélange des deux traversées, ce qui conduit, après refroidissement, à une sorte d'oeillet autour de la perforation. Lors du retrait du moyen de pénétration, le refroidissement est instantané, ce qui permet de figer la perforation obtenue. De préférence, le moyen de chauffage est directement intégré au moyen de pénétration, de telle sorte que le moyen de pénétration est lui-même chauffé.

Lors de la pénétration, le matériau intermédiaire ou l'empilement pourra venir en butée sur une surface qui pourra alors être chauffée localement autour du moyen de pénétration, afin de réaliser un chauffage localisé autour de ce dernier ou bien, au contraire être totalement isolé, de manière à éviter un ramollissement des couches de matières thermoplastique ou thermodurcissable ou d'un mélange des deux les plus proches sur toute leur surface. La **Figure 5** montre un moyen de chauffage/pénétration équipé d'un ensemble d'aiguilles alignées conformément aux lignes de pénétration et pas d'espacement sélectionnés.

L'empilement utilisé dans le cadre de l'invention pourra comprendre un grand nombre de matériaux de renforts, en général au moins quatre et dans certains cas plus de 100, voire plus de 200. L'empilement sera, de préférence, constitué uniquement de matériaux de renfort de fibres de carbone et de couches de matière thermoplastique ou thermodurcissable ou d'un mélange de matières thermoplastique et thermodurcissable. De préférence, les matériaux de renfort de fibres de carbone présents dans l'empilement seront tous identiques et les couches de matière thermoplastique ou thermodurcissable ou d'un mélange de matières thermoplastique et thermodurcissable seront également toutes identiques.

Dans le cadre de l'invention, quelle que soit la variante de mise en œuvre, les matériaux de renfort constitués de fibres de carbone utilisés pour la réalisation de l'empilement sont, de préférence, des nappes unidirectionnelles de fibres de carbone. Bien que ces possibilités soient non préférées, des matériaux de renfort du type tissu, cousus ou non tissés (de type mat) pourraient être utilisés.

Dans le cadre de l'invention, par « nappe unidirectionnelle de fibres de carbone », on entend une nappe constituée exclusivement ou quasi-exclusivement de fibres de carbone déposées selon une même direction, de manière à s'étendre de manière sensiblement parallèle les unes aux autres. En particulier, selon un mode de réalisation particulier de l'invention, la nappe unidirectionnelle ne comporte aucun fil de trame venant entrelacer les fibres de carbone, ni même de couture qui aurait pour but de donner une cohésion à la nappe unidirectionnelle avant son empilement ou son association à une couche de matière thermoplastique ou thermodurcissable ou d'un mélange des deux. Ceci permet en particulier d'éviter toute ondulation au sein de la nappe unidirectionnelle.

Dans la nappe unidirectionnelle, les fils de carbone sont, de préférence, non associés à un liant polymérique et donc qualifiés de secs, c'est-à-dire qu'ils ne sont ni imprégnés, ni enduits, ni associés à un quelconque liant polymérique avant leur association aux couches de matière thermoplastique ou thermodurcissable ou d'un mélange de matières thermoplastique et thermodurcissable. Les fibres de carbone sont, néanmoins, le plus souvent caractérisées par un taux massique d'ensimage standard pouvant représenter au plus 2% de leur masse. Ceci est particulièrement adapté à la réalisation de pièces composites par diffusion de résine, selon les procédés directs bien connus de l'homme de l'art.

Les fibres constitutives des nappes unidirectionnelles sont de préférence continues. Les nappes unidirectionnelles peuvent être constituées de un ou, de préférence, de plusieurs fils de carbone. Un fil de carbone est constitué d'un ensemble de filaments et comporte, en général, de 1 000 à 80 000 filaments, avantageusement de 12 000 à 24 000 filaments. De façon, particulièrement préférée, dans le cadre de l'invention, des fils de carbone de 1 à 24 K, par exemple, de 3K, 6K, 12K ou 24K, et préférentiellement de 12 et 24K, sont utilisés. Par exemple, les fils de carbone présents au sein des nappes unidirectionnelles, présentent un titre de 60 à 3 800 Tex, et préférentiellement de 400 à 900 tex. La nappe unidirectionnelle peut être réalisée avec tout type de fils de carbone, par exemple, des fils Haute Résistance (HR) dont le module en traction est compris entre 220 et 241GPa et dont la contrainte à rupture en traction est comprise entre 3 450 et 4 830MPa, des fils de Module Intermédiaire (IM) dont le module en traction est compris entre 290 et 297GPa et dont la contrainte à la rupture en traction est comprise entre 3 450 et 6 200MPa et des Fils Haut Module (HM) dont le module en traction est compris entre 345 et 448GPa et dont la contrainte à rupture en traction est comprise entre 3 450 et 5 520Pa (d'après le « ASM Handbook », ISBN 0-87170-703-9, ASM International 2001).

Dans le cadre de l'invention, quelle que soit la variante de mise en œuvre, l'empilement est, de préférence, constitués de plusieurs nappes de fibres de carbone unidirectionnelles, en tant que matériaux de renfort, avec au moins deux nappes de fibres de carbone unidirectionnelles s'étendant selon des directions différentes. Toutes les nappes unidirectionnelles peuvent avoir des directions différentes ou seulement certaines d'entre elles. Sinon, hormis leurs différences d'orientation, les nappes unidirectionnelles présenteront, de préférence, des caractéristiques identiques. Les orientations privilégiées sont le plus souvent, celles faisant un angle de 0°, +45° ou -45° (correspondant également à +135°), et + 90° avec l'axe principal de la pièce à réaliser. Le 0° correspond à l'axe de la machine permettant de réaliser l'empilement, c'est-à-dire à l'axe qui correspond à la direction d'avancement de l'empilement lors de sa conception. L'axe principal de la pièce qui est le plus grand axe de la pièce se confond généralement avec le 0°. Il est, par exemple, possible de réaliser des empilements quasi-isotropes, symétriques ou orientés en choisissant l'orientation des plis. A titre d'exemples d'empilement quasi-isotrope, on peut citer l'empilement selon les angles 45°/0°/135°/90°, ou 90°/135°/0°145°. A titre d'exemples d'empilement symétrique, on peut citer 0°/90°/0°, ou 45°/135°/45°. En particulier, des empilements comprenant plus de 4 nappes unidirectionnelles, par exemple de 10 à 300 nappes unidirectionnelles pourront être réalisés. Ces nappes pourront être orientées selon 2, 3, 4, 5, voire plus, directions différentes.

De manière avantageuse, les nappes unidirectionnelles de fibres de carbone présentent un grammage de 100 à 280 g/m$^2$.

Dans le cadre de l'invention, quelle que soit la variante de mise en œuvre, la ou les couches de matière thermoplastique ou thermodurcissable ou d'un mélange des deux utilisées pour la réalisation de l'empilement est (sont), de préférence, un non-tissé de fibres thermoplastiques. Bien que ces possibilités soient non préférées, des couches de matière thermoplastique ou thermodurcissable ou d'un mélange des deux du type tissu, film poreux, grilles, tricots ou dépôt de poudre pourraient être utilisées.

Par non-tissé, qui peut également être nommé « voile », on entend classiquement un ensemble de fibres continues ou courtes disposées aléatoirement. Ces non-tissés ou voiles pourront par exemple être produits par les procédés voie sèche (« Drylaid »), voie humide (« Wetlaid »), par voie fondue (« Spunlaid »), par exemple par extrusion (« Spunbond »), extrusion soufflage («Meltblown»), ou par filage avec solvant (« electrospinning » , « Flashspining »), bien connus de l'homme du métier. En particulier, les fibres constitutives du non-tissé peuvent présenter des diamètres moyens compris dans la gamme allant de 0,5 à 70 $\mu$m, et préférentiellement de 0,5 à 20 $\mu$m. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. Les non-tissés offrent une couverture aléatoire et, de préférence, isotopique et contribuent à l'obtention de performances mécaniques optimales sur la pièce finale.

De manière avantageuse, chacun des non-tissés présent au sein de l'empilement a une masse surfacique comprise dans la gamme allant de 0,2 et 20 g/m$^2$ seront utilisés. De façon préférée, chacun des non-tissés présent au sein de l'empilement a une épaisseur de 0,5 à 50 microns, de préférence de 3 à 35 microns.

La ou les couches de matière thermoplastique ou thermodurcissable présente(s) au sein de l'empilement, et notamment les non-tissés, est (sont), de préférence, en une matière thermoplastique choisie parmi les polyamides, copolyamides, les polyamides - block ether ou ester, les polyphtalamides, les polyesters, les copolyesters, les polyuréthanes thermoplastiques, les polyacétales, les polyoléfines en C2-C8, les polyéthersulfones, les polysulfones, les polyphénylènes sulfones, les polyétherétherCétones, les polyétherCétoneCétone, les poly(sulfure de phénylène), les polyétherimides, les polyimides thermoplastiques, les polymères à cristaux liquides, les phénoxys, les copolymères à blocs tels que les copolymères styrène-butadiene-méthylméthacrylate, les copolymères méthylméthacrylate-acrylate de butylméthylméthacrylate et leurs mélanges.

Les autres étapes utilisées pour la fabrication de la pièce composite sont tout à fait classiques pour l'homme du métier. Notamment, la fabrication de la pièce composite met en œuvre, en tant qu'étapes finales, une étape de diffusion, par infusion ou injection, d'une résine thermodurcissable, d'une résine thermoplastique ou d'un mélange de telles résines, au sein de l'empilement, suivie d'une étape de consolidation de la pièce souhaitée par une étape de polymérisation/réticulation suivant un cycle défini en température et sous pression, et d'une étape d'un refroidissement. Selon un mode de réalisation particulier, adapté par ailleurs à toutes les variantes de mise en œuvre décrites en relation avec l'invention, les étapes de diffusion, consolidation et refroidissement sont mises en œuvre dans un moule fermé.

En particulier, une résine diffusée au sein de l'empilement sera une résine thermoplastique telle que précédemment listée pour la couche de matière thermoplastique constitutive de l'empilement, ou de préférence une résine thermodurcissable choisie parmi les époxydes, les polyesters insaturés, les vinylesters, les résines phénoliques, les polyimides, les bismaléimides. les résines phénol-formaldéhydes, urée-formaldéhydes, les 1,3,5-triazine-2,4,6-triamines, les benzoxazines, les esters de cyanates, et leurs mélanges. Une telle résine pourra également comprendre un ou plusieurs agents durcisseurs, bien connus de l'homme du métier pour être utilisés avec les polymères thermodurcissables sélectionnés.

Dans le cas où la réalisation de la pièce composite utilise la diffusion, par infusion ou injection, d'une résine thermodurcissable, d'une résine thermoplastique ou d'un mélange de telles résines, au sein de l'empilement qui est l'application majeure envisagée dans le cadre de l'invention, l'empilement réalisé, avant l'ajout de cette résine externe, ne contient pas plus de 10% de matière thermoplastique ou thermodurcissable. En particulier, les couches de matière thermoplastique ou thermodurcissable ou d'un mélange des deux représentent de 0,5 à 10% de la masse totale de l'empilement, et de préférence de 1 à 3% de la masse totale de l'empilement, avant l'ajout de cette résine externe. Bien que l'invention soit particulièrement adaptée à la mise en œuvre de procédé directe, elle est également applicable aux procédés indirects mettant en œuvre des matériaux de type préimprégnés.

De manière préférée, dans le cadre de l'invention, l'empilement est effectué de façon automatisée.

L'invention, utilisera de préférence, une infusion dans l'empilement, sous pression réduite, dans un moule fermé, notamment sous une pression inférieure à la pression atmosphérique, notamment inférieure à 1 bar et, de préférence, comprise entre 0,1 et 1 bar, de la résine thermodurcissable ou thermoplastique, ou un mélange de telles résines, pour la réalisation de la pièce composite.

La pièce composite est obtenue au final après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. Dans le cas de résine thermodurcissable, on aura le plus souvent une étape de gélification de la résine avant son durcissement. La pression appliquée lors du cycle de traitement est faible dans le cas de l'infusion sous pression réduite et plus forte dans le cas de l'injection dans un moule RTM.

De manière avantageuse, la pièce composite obtenue présente un taux volumique de fibres de 55 à 70% et notamment de 60 à 65%, ce qui conduit à des propriétés satisfaisantes notamment pour le domaine de l'aéronautique. Le taux volumique de fibres (TVF) d'une pièce composite est calculé à partir de la mesure de l'épaisseur d'une pièce composite en connaissant la masse surfacique de la nappe unidirectionnelle de carbone et les propriétés de la fibre de carbone, à partir de l'équation suivante :

$$TVF(\%) = \frac{n_{plis} \times \text{Masse surfacique UD}_{carbone}}{\rho_{fibre\ carbone} \times e_{plaque}} \times 10^{-1} \qquad \textbf{(1)}$$

Où $e_{plaque}$ est l'épaisseur de la plaque en mm,
$\rho_{fibre\ carbone}$ est la densité de la fibre de carbone en g/cm$^3$,
la masse surfacique UD$_{carbone}$ est en g/m$^2$.

Les exemples ci-après permettent d'illustrer l'invention, mais n'ont aucun caractère limitatif.

Description des matériaux de départ:

- Voile de copolyamide d'épaisseur 118$\mu$m et de 6g/m$^2$, commercialisé sous la référence 1R8D06 par la société Protechnic (Cernay, France)
- Voile de copolyamide d'épaisseur 59$\mu$m et de 3g/m$^2$, commercialisé sous la référence 1R8D03 par la société Protechnic (Cernay, France),
- Nappe unidirectionnelle réalisée avec des fils IMA 12K et 446 Tex de la société Hexcel, de manière à obtenir une masse surfacique de 194g/m$^2$.

Préparation des matériaux intermédiaires

Un empilement voile polyamide/nappe de carbone/voile polyamide est réalisé et lié thermiquement conformément au procédé décrit pages 27 à 30 de la demande WO 2010/046609.

Le matériau intermédiaire ainsi obtenu est alors perforé grâce à un ensemble d'aiguilles tel que représenté **Figure 5.** Chaque aiguille présente un diamètre de 1,6 mm dans sa partie cylindrique régulière et est chauffée à une température de 250°C. La densité de trous obtenue correspond à la configuration présentée **Figure 3** avec une distance de 3mm entre deux perforations sur les lignes perpendiculaires aux fibres unidirectionnelles (Série **S1**) et de 3,5 mm sur les lignes sécantes (Série **S2**). La tension appliquée au matériau intermédiaire lors de la perforation est de 1,7 10$^{-3}$ N/mm.

Préparation des pièces composites

Le matériau est ensuite utilisé pour faire un stratifié, selon un empilement de 16 plis (c'est-à-dire 16 matériaux intermédiaires), puis de la résine est injectée selon un procédé RTM dans un moule fermé. La dimension du panneau est de 340 x 340 x 3 mm pour un TVF visé de 60%. L'empilement choisi est [0/90]4s.

L'empilement de 16 plis est déposé dans un moule en aluminium puis ce moule est placé sous une presse à 10 bars. L'ensemble est monté en température à 120°C. La résine injectée est la résine époxy RTM6 de la société Hexcel. La résine est préchauffée à 80°C dans une machine d'injection, puis injectée dans un moule comportant une entrée pour la résine et une sortie. Une fois que de la résine est récupérée en sortie, l'injection est arrêtée et le moule est monté à 180°C pendant 2 heures. Durant cette période, le moule est maintenu sous une pression de 10 bars.

A titre de comparaison, des empilements réalisés avec des matériaux intermédiaires non perforés sont également réalisés.

Mesure de la conductivité transverse des pièces composites

Trois à quatre échantillons sont découpés dans le panneau aux dimensions 40mm x 40mm. La surface de chaque échantillon est sablée afin d'exposer la surface des fibres de carbone. Cette étape de sablage n'est pas nécessaire si un tissu d'arrachage a été utilisé pour la préparation des pièces. Ensuite, les faces recto/verso de chaque échantillon sont traitées afin de déposer une couche de métal conducteur, typiquement d'or par pulvérisation cathodique, traitement plasma ou évaporation sous vide. Les dépôts d'or ou de tout autre métal doivent être retirés des champs des éprouvettes par sablage ou par ponçage. Ce dépôt de métal conducteur permet d'avoir une faible résistance de contact entre l'échantillon et le moyen de mesure.

Une source de puissance (bloc d'alimentation TTi EL302P programmable 30V/2A, Thurlby Thandar Instruments, Cambridge UK) capable de faire varier le courant et la tension est utilisée pour déterminer la résistance. L'échantillon est en contact avec les 2 électrodes du bloc d'alimentation ; ces électrodes sont mises en contact à l'aide d'une pince. Il faut s'assurer que les électrodes ne sont pas en contact les unes avec les autres ou en contact avec tout autre élément métallique. Un courant de 1 A est appliqué et la résistance est mesurée par deux autres électrodes reliées à un voltmètre/ohmmètre. L'essai est effectué sur chaque échantillon à mesurer. La valeur de la résistance est ensuite ramenée à la valeur de la conductivité à l'aide des dimensions de l'échantillon et des formules suivantes-:

$$\text{Résistivité (Ohm.m)} = \text{Résistance (Ohm)} \times \text{Surface (m}^2) / \text{Epaisseur (m)}$$

$$\text{Conductivité (S/m)} = 1/ \text{Résistivité}$$

Les résultats sont présentés dans la **Tableau 1** ci-après.

**Tableau 1**

| | Exemple 1 | Exemple 2 |
|---|---|---|
| Référence des fibres | IMA GS 12k, 446 Tex | IMA GS 12k, 446 Tex |
| Grammage des fibres | $194\text{gm}^2$ +/-3 | $194\text{gm}^2$ +/-3 |
| Référence du voile thermoplastique | 1R8D06 | 1R8D03 |
| Grammage du voile | 6 g/m$^2$ | 3 g/m$^2$ |
| Conductivité - moyenne (S/m) | **10,9** | **9,2** |
| Conductivité - écart type (S/m) | 1,8 | 1,0 |
| | *Micro-perforation* | |
| Conductivité - moyenne (S/m) | **22,0** | **19,1** |
| Conductivité - écart type (S/m) | 2,1 | 1,4 |
| Gain (%) | **102%** | **108%** |

La comparaison des résultats, sans et avec micro-perforations, montre que la perforation augmente significativement (facteur 2) la conductivité électrique transverse de la pièce composite obtenue.

Bien que les grammages des voiles diffèrent entre les deux exemples, le gain est sensiblement identique.

**Revendications**

1. Utilisation d'un empilement de matériaux de renfort **(R)** de fibres de carbone entre lesquels est intercalée au moins une couche de matière (CM) thermoplastique ou thermodurcissable ou d'un mélange de matières thermoplastique et thermodurcissable, dans lequel au moins deux couches constituant l'empilement et positionnées de manière voisine dans l'empilement, ont subi une opération d'application ponctuelle d'efforts traversants ayant traversé successivement au moins un matériau de renfort **(R)** et au moins une couche de matière **(CM)** thermoplastique ou thermodurcissable ou d'un mélange de matières thermoplastique et thermodurcissable placés en position superposée, pour améliorer la conductivité électrique transverse d'une pièce composite obtenue à partir dudit empilement, l'application ponctuelle d'efforts traversant ayant été réalisée par pénétration d'un moyen ou organe de pénétration qui a ensuite été retiré et après cette application d'efforts traversants, aucun organe externe n'est inséré dans les points d'application pour obtenir l'amélioration de la conductivité électrique.

**2.** Utilisation selon la revendication 1, **caractérisée en ce que** l'opération d'application ponctuelle d'efforts traversants a été réalisée selon une direction transversale à la surface des couches formant l'empilement.

**3.** Utilisation selon l'une des revendications précédentes, **caractérisée en ce que** l'opération d'application ponctuelle d'efforts traversants a été réalisée selon une densité de points d'application (**10**) de 40000 à 250000 par $m^2$.

**4.** Utilisation selon l'une des revendications précédentes, **caractérisée en ce que** l'opération d'application ponctuelle d'efforts traversants a laissé des perforations dans les couches traversées.

**5.** Utilisation selon l'une des revendications précédentes, **caractérisée en ce que** l'opération d'application ponctuelle d'efforts traversants a créé un facteur d'ouverture supérieur à 0 et inférieur ou égal à 8%, de préférence de 2 à 5 %.

**6.** Utilisation selon l'une des revendications précédentes, **caractérisée en ce que** l'opération d'application ponctuelle d'efforts traversants était accompagnée d'un chauffage entrainant la fusion au moins partielle de la matière thermoplastique ou une polymérisation partielle ou complète de la matière thermodurcissable, au niveau des points d'applications (**10**) des efforts traversants.

**7.** Utilisation selon l'une des revendications précédentes, **caractérisée en ce que** l'opération de pénétration a été réalisée, de manière à obtenir une conductivité électrique transverse d'au moins 15 S/m, et de préférence d'au moins 20 S/m, et préférentiellement de 60 à 300 S/m, pour la pièce composite obtenue.

**8.** Utilisation selon l'une des revendications précédentes, **caractérisée en ce que** l'empilement est réalisé à partir de matériaux intermédiaires constitués d'un matériau de renfort (**R**) à base de fibres de carbone, associé sur une ou chacune de ses faces à une couche de matière (**CM**) thermoplastique ou thermodurcissable ou d'un mélange des deux.

**9.** Utilisation selon l'une des revendications 1 à 8, **caractérisée en ce qu'**une seule ou deux couches de matière (**CM**) thermoplastique ou thermodurcissable ou d'un mélange des deux est (sont) située(s) entre deux matériaux de renfort (**R**) à base de fibres de carbone consécutifs.

**10.** Utilisation selon la revendication 9, **caractérisée en ce que** l'empilement correspond soit à un enchainement (**CM**/**R**)$^n$, **CM** désignant une couche de matière thermoplastique ou thermodurcissable ou d'un mélange des deux, **R** un matériau de renfort à base de fibres de carbone et **n** désignant un nombre entier et toutes les couches de matière thermoplastique ou thermodurcissable ou d'un mélange des deux présentes au sein de l'empilement sont de grammage identique ; soit à un enchainement (**CM**/**R**)$^n$/**CM**, **CM** désignant une couche de matière thermoplastique ou thermodurcissable ou d'un mélange des deux, **R** un matériau de renfort à base de fibres de carbone et **n** désignant un nombre entier, les couches externes de matière thermoplastique ou thermodurcissable ou d'un mélange des deux ayant un grammage égal au demi-grammage de chacune des couches internes de matière thermoplastique ou thermodurcissable ou d'un mélange des deux.

**11.** Utilisation selon l'une des revendications précédentes **caractérisée en ce que** l'opération d'application ponctuelle d'efforts traversants a été réalisée sur l'empilement déjà constitué, de manière à traverser, en chaque point d'application, l'épaisseur totale de l'empilement.

**12.** Utilisation selon l'une des revendications 1 ou 10, **caractérisée en ce que** l'opération d'application ponctuelle d'efforts traversants a été réalisée sur les matériaux intermédiaires préalablement à leur empilement, de manière à traverser, en chaque point d'application, l'épaisseur totale de chaque matériau intermédiaire (**R**).

**13.** Utilisation selon l'une des revendications précédentes, **caractérisée en ce que** les matériaux de renfort (**R**) sont des nappes unidirectionnelles de fibres de carbone.

**14.** Utilisation selon la revendication 13, **caractérisée en ce que** les nappes unidirectionnelles de fibres de carbone présentent un grammage de 100 à 280 $g/m^2$ et/ou l'empilement est constitué de plusieurs nappes de fibres de carbone unidirectionnelles, en tant que matériaux de renfort (**R**), avec au moins deux nappes de fibres de carbone unidirectionnelles s'étendant selon des directions différentes.

**15.** Utilisation selon l'une des revendications précédentes, **caractérisée en ce que** la ou les couches de matière **(CM)** thermoplastique ou thermodurcissable ou d'un mélange de matières thermoplastique et thermodurcissable présente(s) est (sont) des non-tissés de fibres thermoplastiques.

**16.** Utilisation selon la revendication 15, **caractérisée en ce que** chacun des non-tissés a une masse surfacique comprise dans la gamme allant de 0,2 et 20 g/m$^2$ et/ou une épaisseur de 0,5 à 50 microns, de préférence de 3 à 35 microns.

**17.** Utilisation selon l'une des revendications précédentes, **caractérisée en ce que** la ou les couches de matière **(CM)** thermoplastique ou thermodurcissable présente(s) est (sont) en une matière thermoplastique choisie parmi les polyamides, copolyamides, les polyamides - block ether ou ester, les polyphtalamides, les polyesters, les copolyesters, les polyuréthanes thermoplastiques, les polyacétales, les polyoléfines en C2-C8, les polyéthersulfones, les polysulfones, les polyphénylènes sulfones, les polyétherétherCétones, les polyétherCétoneCétone, les poly(sulfure de phénylène), les polyétherimides, les polyimides thermoplastiques, les polymères à cristaux liquides, les phénoxys, les copolymères à blocs tels que les copolymères styrène-butadiene-méthylméthacrylate, les copolymères méthylméthacrylate-acrylate de butyl-méthylméthacrylate et leurs mélanges.

**18.** Utilisation selon l'une des revendications précédentes, **caractérisée en ce que** les couches de matière **(CM)** thermoplastique ou thermodurcissable ou d'un mélange des deux représentent de 0,5 à 10% de la masse totale de l'empilement, et de préférence de 1 à 3% de la masse totale de l'empilement.

**19.** Utilisation selon l'une des revendications précédentes, **caractérisée en ce que** la pièce composite est obtenue par mise en œuvre, en tant qu'étapes finales, une étape de diffusion, par infusion ou injection, d'une résine thermodurcissable, d'une résine thermoplastique ou d'un mélange de telles résines, au sein de l'empilement, suivie d'une étape de consolidation de la pièce souhaitée par une étape de polymérisation/réticulation suivant un cycle défini en température et sous pression, et d'une étape d'un refroidissement.

**20.** Utilisation selon la revendication 19, **caractérisée en ce qu'**une résine thermodurcissable est diffusée au sein de l'empilement, ladite résine étant choisie parmi les époxydes, les polyesters insaturés, les vinylesters, les résines phénoliques, les polyimides, les bismaléimides. les résines phénol-formaldéhydes, urée-formaldéhydes, les 1,3,5-triazine-2,4,6-triamines, les benzoxazines, les esters de cyanates, et leurs mélanges.

**21.** Utilisation selon la revendication 19 ou 20, **caractérisée en ce que** les étapes de diffusion, consolidation et refroidissement sont mises en œuvre dans un moule fermé.

**22.** Utilisation selon l'une des revendications précédentes, **caractérisée en ce que** la pièce composite obtenue présente un taux volumique de fibres de 55 à 70% et notamment de 60 à 65%.

**Patentansprüche**

**1.** Verwendung eines Stapels aus Verstärkungsmaterialien (R) aus Kohlenstofffasern, zwischen denen mindestens eine Schicht (CM) aus thermoplastischem oder duroplastischem Material oder aus einem Gemisch von thermoplastischen und duroplastischen Materialien eingeschoben ist, wobei mindestens zwei Schichten, die den Stapel darstellen und benachbart in dem Stapel positioniert sind, einem Vorgang einer punktuellen Anwendung von Durchdringungsbeanspruchungen unterzogen wurden, die nacheinander mindestens ein Verstärkungsmaterial (R) und mindestens eine Schicht (CM) aus thermoplastischem oder duroplastischem Material oder aus einem Gemisch von thermoplastischen und duroplastischen Materialien, die in aufeinandergelegter Position angeordnet sind, durchdrungen haben, zur Verbesserung der transversalen elektrischen Leitfähigkeit eines Verbundteils, das aus dem Stapel erhalten wird, wobei die punktuelle Anwendung von Durchdringungsbeanspruchungen durch Penetration mit einem Penetrationsmittel oder -element durchgeführt wurde, das anschließend zurückgezogen wurde, und nach dieser Anwendung von Durchdringungsbeanspruchungen kein externes Element in die Anwendungspunkte eingeführt wird, um die Verbesserung der elektrischen Leitfähigkeit zu erhalten.

**2.** Verwendung nach Anspruch 1, **dadurch gekennzeichnet, dass** der Vorgang einer punktuellen Anwendung von Durchdringungsbeanspruchungen gemäß einer transversalen Richtung zu der Oberfläche von Schichten, die den Stapel bilden, durchgeführt wurde.

3. Verwendung nach einem der vorhergehenden Ansprüche, **dadurch gekennzeichnet, dass** der Vorgang einer punktuellen Anwendung von Durchdringungsbeanspruchungen gemäß einer Dichte von Anwendungspunkten (10) von 40.000 bis 250.000 pro m$^2$ durchgeführt wurde.

4. Verwendung nach einem der vorhergehenden Ansprüche, **dadurch gekennzeichnet, dass** der Vorgang einer punktuellen Anwendung von Durchdringungsbeanspruchungen Perforationen in den durchdrungenen Schichten hinterlassen hat.

5. Verwendung nach einem der vorhergehenden Ansprüche, **dadurch gekennzeichnet, dass** der Vorgang einer punktuellen Anwendung von Durchdringungsbeanspruchungen einen Öffnungsfaktor größer als 0 und kleiner als oder gleich 8 %, vorzugsweise 2 bis 5 % erzeugt hat.

6. Verwendung nach einem der vorhergehenden Ansprüche, **dadurch gekennzeichnet, dass** der Vorgang einer punktuellen Anwendung von Durchdringungsbeanspruchungen mit einem Erhitzen einherging, das die zumindest partielle Verschmelzung des thermoplastischen Materials oder eine partielle oder vollständige Polymerisation des duroplastischen Materials in Bezug auf Punkte (10) von Anwendungen von Durchdringungsbeanspruchungen bewirkte.

7. Verwendung nach einem der vorhergehenden Ansprüche, **dadurch gekennzeichnet, dass** der Penetrationsvorgang durchgeführt wurde, um eine transversale elektrische Leitfähigkeit für das erhaltene Verbundteil von mindestens 15 S/m und vorzugsweise von mindestens 20 S/m und bevorzugt von 60 bis 300 S/m zu erhalten.

8. Verwendung nach einem der vorhergehenden Ansprüche, **dadurch gekennzeichnet, dass** der Stapel aus Zwischenmaterialien hergestellt wird, die aus einem Verstärkungsmaterial (R) auf der Basis von Kohlenstofffasern bestehen, das auf einer oder jeder seiner Seiten mit einer Schicht (CM) aus thermoplastischem oder duroplastischem Material oder aus einem Gemisch der beiden verbunden ist.

9. Verwendung nach einem der Ansprüche 1 bis 8, **dadurch gekennzeichnet, dass** eine einzige oder zwei Schichten (CM) aus thermoplastischem oder duroplastischem Material oder aus einem Gemisch der beiden sich zwischen zwei aufeinanderfolgenden Verstärkungsmaterialien (R) auf der Basis von Kohlenstofffasern befindet/befinden.

10. Verwendung nach Anspruch 9, **dadurch gekennzeichnet, dass** der Stapel entweder einer Verknüpfung (CM/R)$^n$, wobei CM für eine Schicht aus thermoplastischem oder duroplastischem Material oder aus einem Gemisch der beiden steht, R für ein Verstärkungsmaterial auf der Basis von Kohlenstofffasern und n für eine ganze Zahl steht und alle Schichten aus thermoplastischem oder duroplastischem Material oder aus einem Gemisch der beiden, die in dem Stapel vorliegen, ein identisches Flächengewicht aufweisen, oder einer Verknüpfung (CM/R)$^n$/CM entspricht, wobei CM für eine Schicht aus thermoplastischem oder duroplastischem Material oder aus einem Gemisch der beiden steht, R für ein Verstärkungsmaterial auf der Basis von Kohlenstofffasern und n für eine ganze Zahl steht, wobei die äußeren Schichten aus thermoplastischem oder duroplastischem Material oder aus einem Gemisch der beiden ein Flächengewicht aufweisen, das gleich dem halben Flächengewicht jeder von inneren Schichten aus thermoplastischem oder duroplastischem Material oder aus einem Gemisch der beiden ist.

11. Verwendung nach einem der vorhergehenden Ansprüche, **dadurch gekennzeichnet, dass** der Vorgang einer punktuellen Anwendung von Durchdringungsbeanspruchungen an dem bereits gebildeten Stapel durchgeführt wurde, um die gesamte Dicke des Stapels an jedem Anwendungspunkt zu durchdringen.

12. Verwendung nach einem der Ansprüche 1 bis 10, **dadurch gekennzeichnet, dass** der Vorgang einer punktuellen Anwendung von Durchdringungsbeanspruchungen auf den Zwischenmaterialien vor deren Stapeln durchgeführt wurde, um die gesamte Dicke jedes Zwischenmaterials (R) an jedem Anwendungspunkt zu durchdringen.

13. Verwendung nach einem der vorhergehenden Ansprüche, **dadurch gekennzeichnet, dass** die Verstärkungsmaterialien (R) unidirektionale Bahnen aus Kohlenstofffasern sind.

14. Verwendung nach Anspruch 13, **dadurch gekennzeichnet, dass** die unidirektionalen Bahnen aus Kohlenstofffasern ein Flächengewicht von 100 bis 280 g/m$^2$ aufweisen und/oder der Stapel aus mehreren Bahnen aus unidirektionalen Kohlenstofffasern als Verstärkungsmaterial (R) besteht, wobei mindestens zwei Bahnen aus unidirektionalen Kohlenstofffasern sich gemäß unterschiedlichen Richtungen erstrecken.

**15.** Verwendung nach einem der vorhergehenden Ansprüche, **dadurch gekennzeichnet, dass** es sich bei der oder den vorliegende(n) Schicht(en) (CM) aus thermoplastischem oder duroplastischem Material oder aus einem Gemisch von thermoplastischen und duroplastischen Materialien um Vliese aus thermoplastischen Fasern handelt.

**16.** Verwendung nach Anspruch 15, **dadurch gekennzeichnet, dass** jedes der Vliese eine flächenbezogene Masse, die in dem Bereich liegt, der von 0,2 bis 20 g/m$^2$ reicht, und/oder eine Dicke von 0,5 bis 50 Mikron, vorzugsweise 3 bis 35 Mikron aufweist.

**17.** Verwendung nach einem der vorhergehenden Ansprüche, **dadurch gekennzeichnet, dass** die vorliegende(n) Schicht(en) (CM) aus thermoplastischem oder duroplastischem Material aus einem thermoplastischen Material ist/sind, das aus Polyamiden, Copolyamiden, Block-Ether- oder -Ester-Polyamiden, Polyphthalamiden, Polyestern, Copolyestern, thermoplastischen Polyurethanen, Polyacetalen, C2-C8-Polyolefinen, Polyethersulfonen, Polysulfonen, Polyphenylensulfonen, Polyetheretherketonen, Polyetherketonketon, Poly(phenylensulfid), Polyetherimiden, thermoplastischen Polyimiden, Flüssigkristallpolymeren, Phenoxys, Blockcopolymeren wie Styrol-Butadien-Methylmethacrylat-Copolymeren, Methylmethacrylat-Butylacrylat-Methylmethacrylat-Copolymeren und deren Gemischen ausgewählt ist.

**18.** Verwendung nach einem der vorhergehenden Ansprüche, **dadurch gekennzeichnet, dass** die Schichten (CM) aus thermoplastischem oder duroplastischem Material oder aus einem Gemisch der beiden 0,5 bis 10 % der gesamten Masse des Stapels und vorzugsweise 1 bis 3 % der gesamten Masse des Stapels ausmachen.

**19.** Verwendung nach einem der vorhergehenden Ansprüche, **dadurch gekennzeichnet, dass** das Verbundteil durch Ausführen eines Schritts der Verteilung eines duroplastischen Harzes, eines thermoplastischen Harzes oder eines Gemischs derartiger Harze in dem Stapel durch Infusion oder Einspritzen, gefolgt von einem Schritt der Verfestigung des gewünschten Teils durch einen Schritt der Polymerisation/Vernetzung nach einem definierten Temperaturzyklus und unter Druck und einen Schritt einer Abkühlung als letzte Schritte erhalten wird.

**20.** Verwendung nach Anspruch 19, **dadurch gekennzeichnet, dass** ein duroplastisches Harz in dem Stapel verteilt wird, wobei das Harz aus Epoxiden, ungesättigten Polyestern, Vinylestern, phenolischen Harzen, Polyimiden, Bismaleinimiden, Phenol-Formaldehyd-Harzen, Harnstoff-Formaldehyden, 1,3,5-Triazin-2,4,6-triaminen, Benzoxazinen, Estern von Cyanaten und deren Gemischen ausgewählt ist.

**21.** Verwendung nach Anspruch 19 oder 20, **dadurch gekennzeichnet, dass** die Schritte der Verteilung, der Verfestigung und der Abkühlung in einer geschlossenen Gießform ausgeführt werden.

**22.** Verwendung nach einem der vorhergehenden Ansprüche, **dadurch gekennzeichnet, dass** das erhaltene Verbundteil einen Volumenanteil an Fasern von 55 bis 70 % und insbesondere von 60 bis 65 % aufweist.

**Claims**

**1.** Use of a stack of reinforcement materials (R) of carbon fibres between which is sandwiched at least one layer (CM) of thermoplastic or thermosetting material or a mixture of thermoplastic and thermosetting materials, in which at least two layers constituting the stack and positioned as neighbours in the stack, were subjected to an operation of spot application of traversing forces which successively traversed at least one reinforcement material (R) and at least one layer of thermoplastic or thermosetting material (CM) or a mixture of thermoplastic and thermosetting materials placed in superposed position, so as to improve the transverse electrical conductivity of the composite part obtained from said stack, the spot application having been carried out by penetration of a penetration mean or organ which had later been removed after this application of traversing forces, no external organ being inserted in the application points for achieving the improvement of electrical conductivity.

**2.** Use according to claim 1, **characterized in that** the operation of spot application of traversing forces is obtained in a direction transverse to the surface of the layers forming the stack.

**3.** Use according to one of the preceding claims, **characterized in that** the operation of spot application of traversing forces is performed with a density of points of application (10) of 40,000 to 250,000 per m$^2$.

**4.** Use according to one of the preceding claims, **characterized in that** the operation of spot application of traversing forces leaves perforations in the traversed layers.

5. Use according to one of the preceding claims, **characterized in that** the operation of spot application of traversing forces leads to the creation of an openness factor greater than 0 and less than or equal to 8%, preferably from 2 to 5%.

6. Use according to one of the preceding claims, **characterized in that** the operation of spot application of traversing forces is accompanied by a heating that causes at least partial fusion of the thermoplastic material or a partial or complete polymerization of the thermosetting material at the points of application (10) of the traversing forces.

7. Use according to one of the preceding claims, **characterized in that** the penetration operation is performed so as to obtain a transverse electrical conductivity of at least 15 S/m, and preferably at least 20 S/m, and preferentially of 60 to 300 S/m, for the composite part obtained.

8. Use according to one of the preceding claims, **characterized in that** the stack is formed from intermediate materials composed of a reinforcement material (R) based on carbon fibres, associated on each of its faces with a layer (CM) of thermoplastic or thermosetting material or a mixture of the two.

9. Use according to claims 1 to 8, **characterized in that** a single or two layers (CM) of thermoplastic or thermosetting material or a mixture of the two is(are) located between two reinforcement materials (R) based on carbon fibres.

10. Use according to claim 9, **characterized in that** the stack corresponds to either a $(CM/R)^n$ sequence, CM designating a layer of thermoplastic or thermosetting material or a mixture of the two, R a reinforcement material based on carbon fibres, and n an integer, and that all the layers of thermoplastic or thermosetting material or a mixture of the two present within the stack are of identical grammage ; or a $(CM/R)^n/CM$ sequence, CM designating a layer of thermoplastic or thermosetting material or a mixture of the two, R a reinforcement material based on carbon fibres, and n an integer, the external layers of thermoplastic or thermosetting material or a mixture of the two having a grammage equal to one-half the grammage of each of the inner layers of thermoplastic or thermosetting material or a mixture of the two.

11. Use according to one of the preceding claims, **characterized in that** the operation of spot application of traversing forces is performed on the stack already formed, so as to traverse the total thickness of the stack at each application point.

12. Use according to one of claims 1 or 11 **characterized in that** the operation of spot application of traversing forces is performed on the intermediate materials prior to their stacking, so as to traverse the total thickness of each intermediate material (R) at each application point.

13. Use according to one of the preceding claims, **characterized in that** the reinforcement materials (R) are unidirectional sheets of carbon fibres.

14. Use according to claim 13 **characterized in that** the unidirectional sheets of carbon fibres have a grammage of 100 to 280 $g/m^2$ and/or the stack consists of several sheets of unidirectional carbon fibres as reinforcement materials (R) with at least two sheets of unidirectional carbon fibre extending in different directions.

15. Use according to one of the preceding claims, **characterized in that** the layer or layers (CM) of thermoplastic or thermosetting material or a mixture of thermoplastic and thermosetting materials is (are) non-woven thermoplastic fibres.

16. Use according to claim 15 **characterized in that** each of the non-wovens has a surface density in the range of 0.2 to 20 $g/m^2$ and/or has a thickness of 0.5 to 50 microns, preferably of 3 to 35 microns.

17. Use according to one of the preceding claims, **characterized in that** the existing layer or layers (CM) of thermoplastic or thermosetting material(s) is (are) a thermoplastic material selected from among polyamides, copolyamides, polyamides - block ether or ester, polyphthalamides, polyesters, copolyesters, thermoplastic polyurethanes, polyacetals, polyolefins C2-C8, polyethersulfones, polysulfones, polyphenylene sulfones, polyetheretherketones, polyetherketoneketones, poly(phenylene sulfide), polyetherimides, thermoplastic polyimides, liquid crystal polymers, phenoxies, block copolymers such as styrene-butadiene-methylmethacrylate copolymers, methylmethacrylate-butyl acrylate-methyl methacrylate and mixtures thereof.

**18.** Use according to one of the preceding claims, **characterized in that** the layers (CM) of thermoplastic or thermosetting material or a mixture of both represent from 0.5 to 10% of the total weight of the stack, and preferably from 1 to 3% of the total weight of the stack.

**19.** Use according to one of the preceding claims, **characterized in that** the fabrication of the composite part implements, as final steps, a diffusion step, by infusion or injection, of a thermosetting resin, a thermoplastic resin or a mixture of such resins, into the stack, followed by a step of hardening of the desired part by a polymerization/crosslinking step in a cycle of defined temperature and pressure, and a cooling step.

**20.** Use according to claim 19, **characterized in that** a thermosetting resin is circulated within the stack, said resin being selected from epoxies, unsaturated polyesters, vinyl esters, phenolic resins, polyimides, bismaleimides. the phenolformaldehyde resins, urea-formaldehyde, 1,3,5-triazine-2,4,6-triamines, benzoxazines, cyanate esters, and mixtures thereof.

**21.** Use according to claims 19 or 20, **characterized in that** the diffusion, cooling and consolidation steps are implemented in a closed mould.

**22.** Use according to one of the preceding claims, **characterized in that** the composite part obtained has a volume fibre ratio of 55 to 70% and notably of 60 to 65%.

FIG.1

FIG.2

FIG.3

FIG.4

FIG.5

## RÉFÉRENCES CITÉES DANS LA DESCRIPTION

**Documents brevets cités dans la description**

- EP 1125728 A
- US 6828016 B
- WO 0058083 A
- WO 2007015706 A
- WO 2006121961 A
- US 6503856 B
- WO 2010046609 A
- WO 2010061114 A
- WO 2011048340 A
- EP 2505342 A
- WO 2011065437 A
- US 20100021682 A1
- WO 2011086266 A

**Littérature non-brevet citée dans la description**

- ASM Handbook. ASM International, 2001